Europäisches Patentamt

European Patent Office

Office européen des brevets

(19)

(11) Publication number: **0 505 651 A1**

## (12) EUROPEAN PATENT APPLICATION

(21) Application number: **91480051.1**

(22) Date of filing: **29.03.91**

(51) Int. Cl.5: **G06F 13/40, G06F 13/38**

(43) Date of publication of application:
**30.09.92 Bulletin 92/40**

(84) Designated Contracting States:
**DE FR GB**

(71) Applicant: **INTERNATIONAL BUSINESS MACHINES CORPORATION**

**Armonk, NY 10504(US)**

(72) Inventor: **Brezzo, Bernard**
**261, av. de Pessicart**
**F-06100 Nice(FR)**
Inventor: **Calvignac, Jean-Louis**
**187, chemin les Vallières**
**F-06610 La Gaude(FR)**
Inventor: **Munier, Jean-Marie**
**11, chemin des Colles**
**F-06800 Cagnes sur Mer(FR)**
Inventor: **Naudin, Bernard, "les Provencales"**
**Villa No. 10, Corniche d'Agrimont**
**F-06700 St. Laurent du Var(FR)**
Inventor: **Robbe, Jean-Claude**
**64 (bis), chemin des Collettes**
**F-06800 Cagnes sur Mer(FR)**

(74) Representative: **Lattard, Nicole et al**
**Compagnie IBM France Département de Propriété Intellectuelle**
**F-06610 La Gaude(FR)**

(54) **Mechanism for controlling the resources of a distributed information processing system.**

(57) A data processing system includes data processing adapters (2) for controlling the data transfers between end systems (1) and a memory through contention type busses (7 and 11) and a control processor connected to the system bus (7) for through a coupler (8) for controlling the physical resources such as registers or memories of the whole data processing system. A control operation is initiated by the control processor which presents on its processor bus (14) a control operation to be executed in a destination unit which can be the coupler, a selected data processing adapter or a selected end system. Each unit is provided with a control operation interface dedicated to the processing of the control operation or its forwarding toward the destination unit and the preparation of a response to the control operation in the destination unit and the propagation of the response toward the coupler, so as to minimize the bus occupancy times.

FIG.1

The present invention relates to a distributed data processing system and more particularly to a mechanism for controlling the resources of such a system with a minimum impact on the data processing capabilities of the system.

Background of the Invention

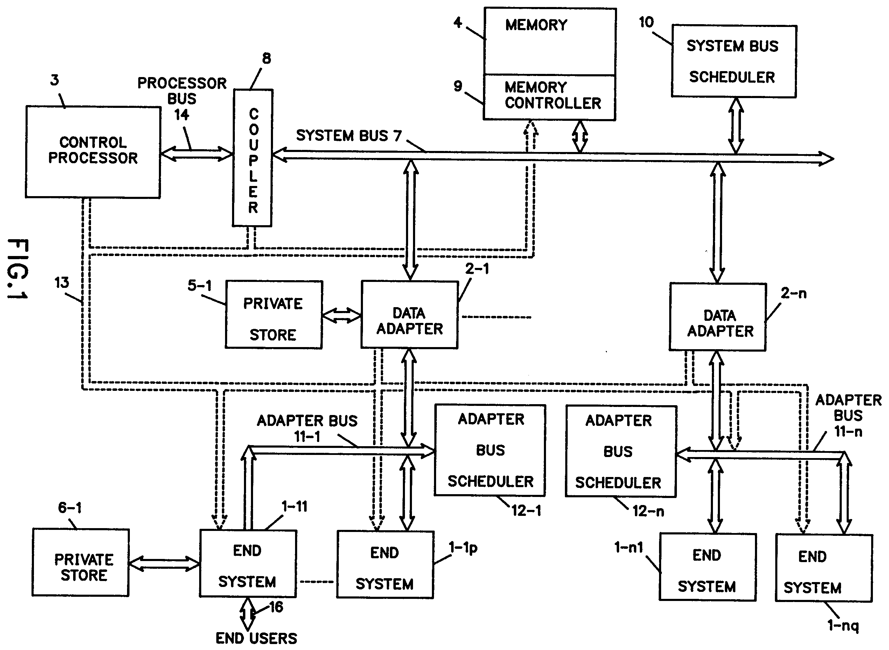

A distributed data processing system such as a communications controller comprises end systems 1, data adapters 2 and a control processor 3 arranged as shown in Figure 1. The end systems provide the interface with data traffic sources/sinks such as telecommunication circuits, host channels, local area networks etc. The data adapters are in charge of storing data messages received from the end systems into a memory 4 and of providing messages from the memory to the end systems.

Figure 1 schematically represents a number n of data adapters referenced 2-1 to 2-n, each adapter being attached to a plurality of end systems. For example adapter 2-1 is attached to a number p of end systems referenced 1-11 to 1-1p and adapter 2-n is attached to a number q of end systems referenced 1-n1 to 1-nq.

Some of the data adapters and end systems may be provided with private stores, such as private store 5-1 attached to adapter 2-1 and private store 6-1 attached to end user 1-11.

A structure of the type represented in Figure 1 is based on a contention type system bus 7 allowing high speed data transfers between the data adapters, the control processor and the memory. The control processor has access to this bus 7 through a coupler 8. The accesses to the bus 7 by the adapters, control processor 3 and memory controller 9 are controlled by a system bus scheduler 10

The end systems 1-11 to 1-1p and 1-n1 to 1-nq are connected to their data adapters 2-1 and 2-n through adapter busses 11-1 and 11-n respectively. The accesses to these busses are controlled by adapter bus schedulers 12-1 and 12-n respectively.

The control processor 3 may be in charge of logical operations such as message routing from/to data adapters, but its main function consists in controlling all the physical resources such as registers within the whole data processing system. The resource control functions of the control processor imply that the control processor can access any physical register or private store of the system.

A conventional way of controlling the system resources consists in providing a separate control bus 13 as shown in dotted line in Figure 1.

The main advantage of this solution resides in the fact that the data transfers on the system bus 7 and adapter busses 11-1 9 are not affected by the control operations. However, this solution presents the following drawbacks.

If a parallel bus is used to convey the addresses and data information needed by the control operation, it costs many additional lines drivers/receivers, input/output pins in the control processor and in each controlled entity (data adapter, end system, memory controller).

If a serial point to point or multipoint serial bus is used, an additional protocol is to be put in place. In addition, the time needed to actually read or update a resource may become prohibitive.

Another way of controlling the system resources consists in providing the coupler 8 with the capability of requesting the use of the system bus in order to convey the control operations.

Once the coupler request is granted by the system bus scheduler 10, the control operation is executed by the following steps, assuming this operation is a read operation of a resource located inside an end system for example 1-11.

1. The control operation code is present on the processor bus 14 (step duration t1),

2. it is decoded by the coupler 8 and forwarded to the system bus 7 (step duration T1),

3. the control operation is present on system bus 7 (step duration t2)

4. the control operation code is decoded by the adapter and forwarded to adapter bus 11-1 (step duration T2),

5. the control operation is present on the adapter bus (step duration t3),

6. the control operation is decoded and executed by the end system 1-11 (step duration T3),

7. the resource contents (read data) are gated by the end system to the adapter bus 1-11 step duration T'3),

8. the returned data are present on the adapter bus 11-1 (step duration t'3),

9. the returned data are received by the adapter and forwarded to the system bus 7 (step duration T'2),

10. the returned data are present on the system bus (step duration t'2),

11. the returned data are received by the coupler 8 and forwarded to the processor bus 14 (step duration T'1),

12. the returned data are present on the coupler bus (step duration t'1).

It could be assumed that:

$$t1 = t'1 \quad t2 = t'2 \quad t3 = t'3$$
$$T1 = T'1 \quad T2 = T'2 \quad T3 = T'3$$

and that t1, t2 and t3 are short compared to T1, T2 and T3.

Thus, the impact of the operations on each bus can be calculated as follows:

Processor bus occupancy : $2 - (t1 + t2 + t3 + T1 + T2 + T3)$

System bus occupancy : $2(t2 + t3 + T2 + T3)$

Adapter bus occupancy : $2(t3 + T3)$

These bus occupancies are particularly critical when the control operation is a read operation of a word in the private store controlled by an end system.

This solution leads to a too long monopolization of the critical system components such as the system bus and adapter bus which cannot be used during this time to perform their normal data transfer functions.

Summary of the Invention

An object of the present invention is to provide a mechanism allowing the physical resources of a data processing system to be controlled with a minimum impact on the critical system components.

Another object of the present invention is to provide such a mechanism which does not require additional busses dedicated to the control of the physical resources.

The apparatus according to the present invention is implemented in a data processing system which includes data processing adapters for controlling the data transfers between end systems and a memory through contention type busses and a control processor connected through a coupler to the system bus also connected to the data processing adapters for controlling the physical resources such as registers or memories of the whole data processing system. A control operation is initiated by the control processor which presents on its processor bus a control operation to be executed in a destination unit which can be the coupler, a selected data processing adapter or a selected end system. At least, the coupler unit and, in a preferred embodiment, each unit is provided with a control operation interface dedicated to the processing of the control operation or its forwarding toward the destination unit and the preparation of a response to the control operation in the destination unit and the forwarding of the response toward the coupler, so as to minimize the bus occupancy times.

The control operation interface in the coupler is connected to the processor bus on the one hand and to the system bus on the other hand and includes:

coupler control operation receiving means responsive to the information on the processor bus for determining whether this information is a control operation for a resource of a data processing adapter and if yes requesting an access to the system bus through a system bus scheduler and forwarding the control operation from the processor bus to the system bus when the access is authorized by the bus scheduler,

coupler response receiving means which are set in a wait status when the control operation receiving means detect that the control operation is for a resource of a data processing adapter and are responsive to the information present on the system bus for detecting when set in the wait status whether this information is a response to the control operation for storing the control operation response in coupler response storing means where the response is available for the control processor.

Brief description of the Figures

Figure 1 represents a system in which the present invention can be implemented instead of the prior art solution.

Figure 2 represents the mechanism implemented in each unit of the system of Figure 1 according to the present invention.

Figure 3 shows how Figure 3A and 3B, which represent the control operation interface of Figure 2 in details have to be assembled.

Figure 4 represents possible formats for the type/address bus.

Figure 5 represents the control and output logic circuit 65 of Figure 3.

Detailed Description of the Invention

The mechanism according to the present invention is implemented in a system such as shown in Figure 1. In such a system, two types of operations have to be performed namely, message transfer operations between the end systems and the memory through the data adapters 2-1 to 2-n and busses 7, 11-1 to 11-n, as described in the background part and control operations which are initiated by the processor 3 for controlling the resources of the different units: coupler, data adapters and end systems.

To perform the control operations the control processor has to use the busses 7, 11-1 to 11-n, normally used and sized to transfer the messages, in order to access the physical resources to be controlled. The present invention will be described assuming that the control operations consist in writing or reading control information into/from registers or addressed locations in the private stores.

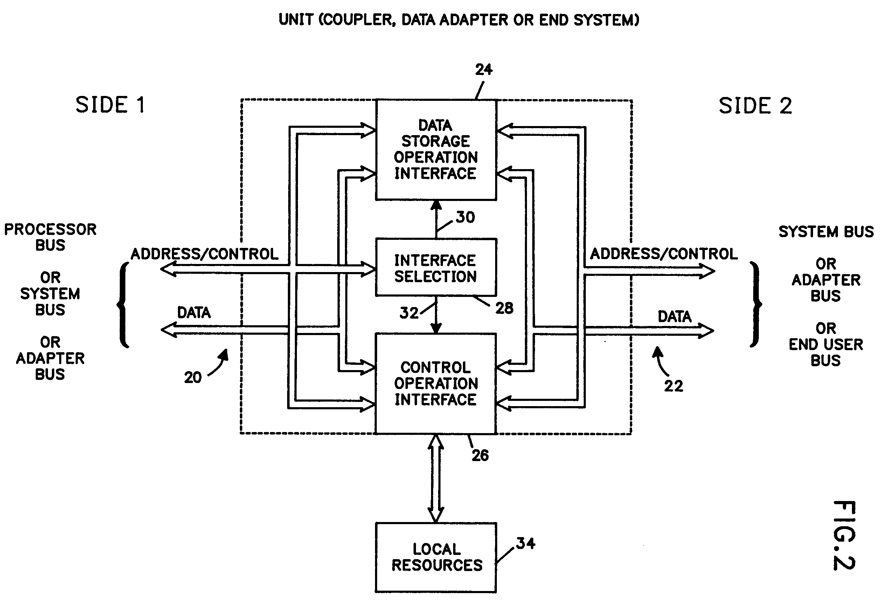

According to the present invention, in order to perform this function, each unit such as the coupler, the data adapters and the end systems are provided with an interface arrangement such as shown in Figure 2.

In each unit, this arrangement is connected to a first input/output bus 20, on the one hand and to a second input/output bus 22 on the other hand.

If the arrangement of Figure 2 is located in coupler 8, bus 20 is the processor bus 14 and bus 22 is the system bus 7. If it is located in data adapter 2-1, bus 20 is the system bus 7 and bus 22 is the adapter bus 11-1. If it is located in end system 1-11, bus 20 is the adapter bus 11-1 and bus 22 is the end user bus shown as 16 in Figure 1, which connects the end system to the end users for receiving and transmitting data messages from/to the end users.

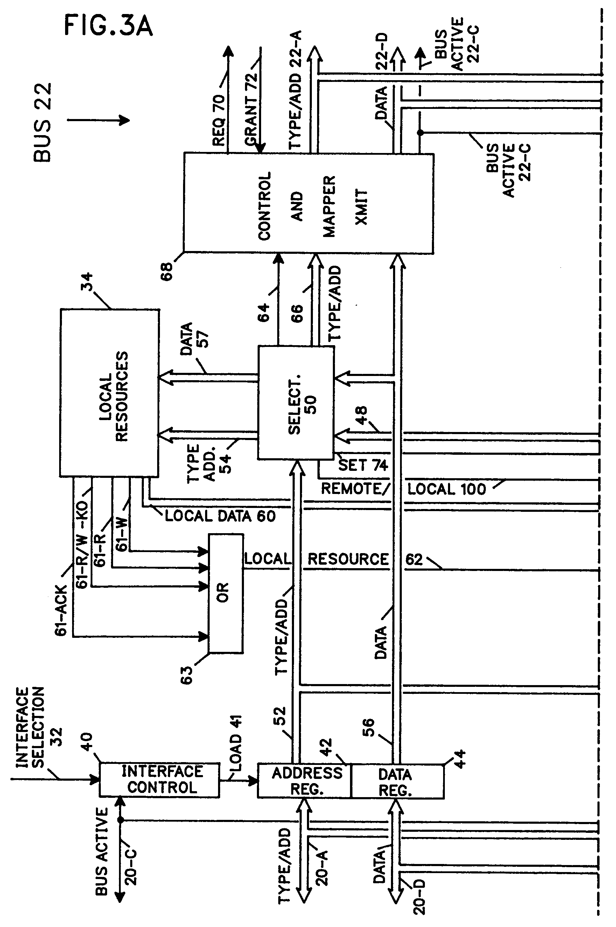

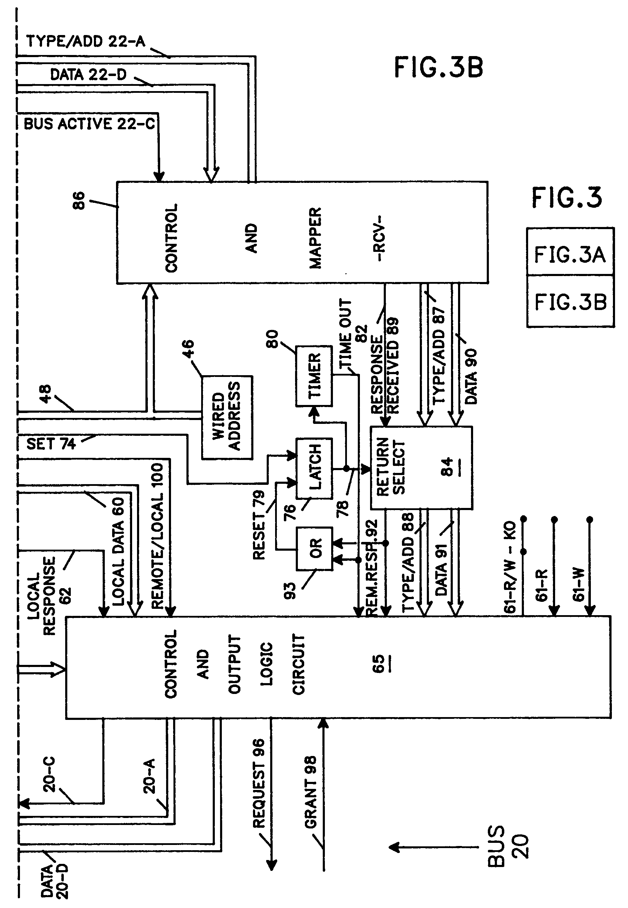

The busses 20 and 22 comprise address and control lines which are represented in more details in Figure 3.

The configuration of busses 20 and 22 can be different, which means that the total number of lines as well as the number of address and data lines can be different as will be explained later.

The arrangement according to the subject invention comprises two interfaces, namely a data storage operation interface 24 and a control operation interface 26.

Busses 20 and 22 are bidirectional busses. The address/control information and data provided by one upstream located unit to bus 20 are provided to interfaces 24 and 26. The address/control lines of bus 20 are provided to an interface selection circuit 28 which determines whether the operation defined by the address and control information is a normal memory operation or a control operation.

If the operation is a normal memory operation, the interface selection circuit activates line 30 to select the data storage operation interface 24 which manages the processing of the operation and provides the address and control information and data, if any, to bus 22 .

For example, assuming that bus 20 is the system bus 7 and bus 22 is the adapter bus 11-1, and that the memory controller has access to the bus 7 for transmitting data messages from the memory to an end system such as 1-1p, the data storage operation interface 24 in data adapter 2-1 is selected. The address and control information on address and control lines of bus 7 indicates that an operation is present on the bus and that this is a memory read operation for end system 1-1p having the address A1-1p. The memory read operation code and address A1-1p are recognized by interface selection circuit 28, so that the data storage operation interface 24 in adapter 2-1 is selected to process this operation. This consists in requesting the access to bus 11-1 by means of a request raised on a REQUEST line of the bus 11-1 assigned to the data storage operation interface of adapter 2-1 and providing the address and control information and data to bus 11-1 when the bus access is granted by adapter bus scheduler 12-1, by means of a grant signal sent by the adapter bus scheduler on a grant line of the bus 11-1 assigned to the data storage operation interface of the adapter 2-1.

This data storage operation interface will not be described in details since it is not part of the present invention.

If the operation defined by the address/control information on bus 20 indicates that the operation is a control operation, interface selection circuit activates line 32 to select the control operation interface 26. The operation is processed by this interface as will be described in details in reference to Figure 3.

The control operation interface determines whether the operation concerns local resources 34, i.e a register or a private store of the unit, or not.

A control operation which concerns a local resource is executed under control of interface 26 and a response is sent to the upstream located unit (for example the coupler 8 if the unit is a data adapter) through bus 20. A control operation which does not concern local resources 34 of the unit is forwarded towards the downstream located unit through bus 22, as will be described in more details later on.

In the reverse direction, address/control information from a downstream located unit are received by the interface arrangement of Figure 2 from bus 22 and are provided to the data storage operation interface 24 or control information interface 26 and processed by one of this interface depending upon whether the operation is a memory operation or a response to a control operation. This can be determined either by the interface selection circuit 28 or in a preferred embodiment of the invention by the interfaces 24 and 26 themselves.

If the operation is a memory operation, such as a WRITE memory operation, it is performed under control of the data storage operation interface 24 which manages the access to the bus 20 and transfers the address/control information and data from bus 22 to bus 20.

If the operation is a response to a control operation, it is processed by the control operation interface as will be described now in reference to Figure 3.

The control lines in the system bus and adapter bus comprise a bus ACTIVE line common to all units attached to the bus and which is activated when a control operation or memory operation is present on the bus, two REQUEST lines per unit, one being activated by the data storage operation interface to request the access to the bus and one activated by the control operation interface to request access to the bus, and two GRANT lines per unit activated by the bus scheduler to grant the access to the bus to the data storage interface or control operation interface of each unit.

Bus 14 is the control processor bus, so that its control lines depend upon the control processor specification. One of this line has the same function as the ACTIVE line of the system bus or adapter bus.

The control operation interface comprises an interface control circuit 40 which is responsive to the signal on line 32 from interface selection circuit and to the bus ACTIVE signal on a ACTIVE line 20-C of the bus 20 indicating that an operation is present on the type/address lines 20-A and data 20-D of bus 20, for activating a LOAD line 41 which causes the type/address information from lines 20-A and DATA from lines 20-D to be loaded into address register 42 and data register 44 respectively.

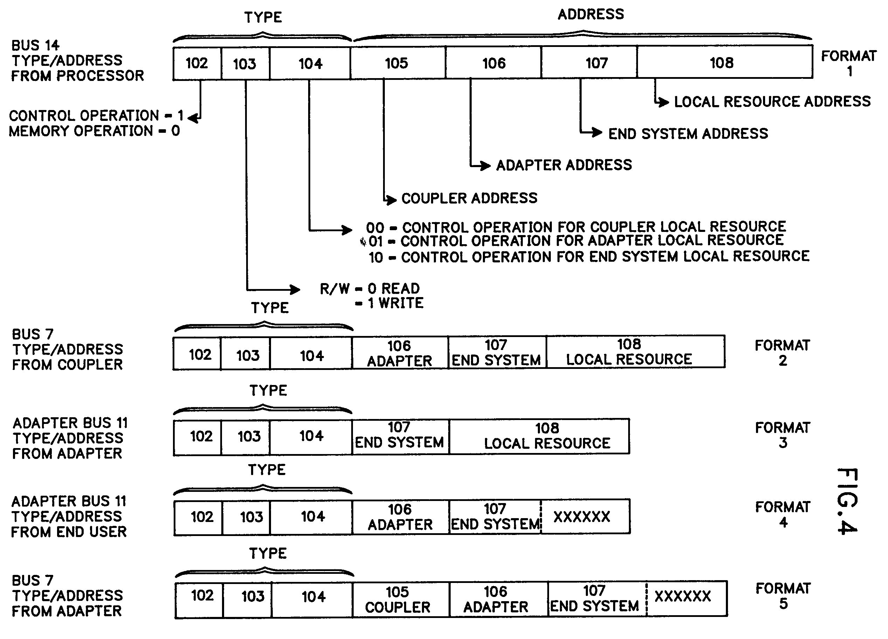

Type/address information indicates the type of control operation, i.e. a read or write operation, and the address of the units (coupler unit address, adapter unit address and end system unit address, as the case may be) and the address of the local resource concerned by the control operation. This will be described in more details in reference to Figure 4.

Each unit has a wired address stored in a wired address register 46. The wired address in register 46 is provided to a selection circuit 50 through bus 48 and selected fields of the type/address information on bus 52 are tested or compared by the selection circuit with the wired address to determine whether the control operation concerns a local resource of the unit or has to be propagated to a downstream located unit or does not concern the unit.

If the selection circuit 50 detects that the control operation concerns a selected local resource of the unit, the type of control operation and local resource address are provided to local resources 34 of the unit through bus 54 together with the data register contents which is gated by selection circuit 50 from bus 56 to data bus 57.

In response to the type/address information on bus 54 the control operation is executed within the local resources 34 which means that if the control operation is a write operation the data present on bus 57 are written into the addressed register or private store location within the local resources. If the control operation is a read operation, the addressed register or private store location is read and the read data are provided on bus 60.

When the read or write operation is completed, a LOCAL RESPONSE signal is generated on line 62 indicative that the control operation initiated by the control processor has been completed. This signal is provided by OR circuit 63 from a READ-OK signal on line 61-R or a WRITE-OK signal on line 61-W provided by the local resources 34 when the read or write operations are successfully completed, or a R/W-KO signal on line 61-R/W-KO when the operation has been unsuccessfully completed. In addition according to an improvement of the invention, the local resource can send an acknowledgement of the control operation by activating line 61-ACK which is provided to OR circuit 63 and complete the control operation by reading the data or writing the data at an assigned address within the memory, which is known to the control processor.

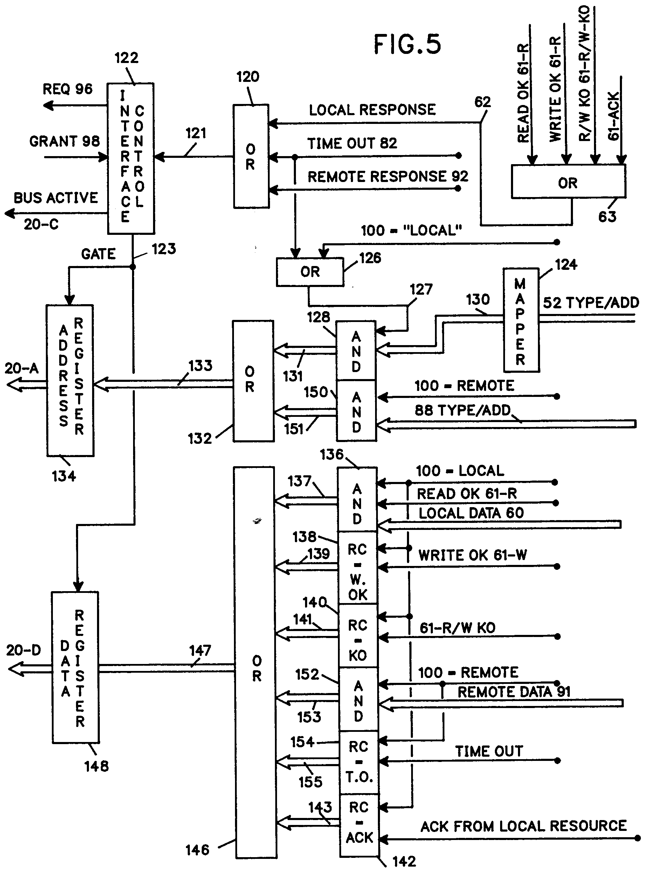

The response to the control operation is sent by the control operation interface to bus 20 through a control and output logic circuit 65 which will be described in reference to Figure 5.

As will be explained later on, if selection circuit 50 detects that the control operation does not concern a local resource of the unit, it activates line 64 and gates the type/address fields from bus 52 to bus 66. Thus, the type/address from bus 66 and data from bus 56 are provided to a control and mapper interface circuit 68 which controls the forwarding of the control operation towards the downstream located units.

In response to the active signal on line 64, control and mapper interface circuit 68 initiates a bus request on bus REQUEST line 70 assigned to the control operation interface of the unit (coupler, or data adapter as the case may be). This request is provided to the bus scheduler, namely system bus scheduler 10 or adapter bus scheduler 12-1 or 12-n.

The type/address and data from bus 66 are mapped by the control and mapper interface 68 to provide the type/address and data on bus 22 according to the bus format.

Bus scheduler activates the GRANT line 72 of bus 22 assigned to the control operation interface of the unit when the request can be serviced, which causes the mapped type/address and data and an ACTIVE signal to be provided on lines 22-A, 22-D and 22-C of bus 22 to forward the control operation to the downstream located unit connected to bus 22.

The control operation is forwarded until it reaches the destination unit which executes it.

The selection circuit 50 which detects that the control operation has to be forwarded toward the downstream located unit activates line 74, which sets latch 76. The active signal on output line 78 of latch 76 starts a timer 80 which has a time out value set to the maximum time delay needed to receive the response from the destination unit. When the time out value is reached, timer 80 activates line 82.

The active signal on line 78 is provided to a return selection circuit 84 to set this circuit in a WAIT status which means that this circuit is ready to receive the response to the control operation.

The type/address and data from a downstream located unit received on lines 22-A, 22-D and the ACTIVE signal on line 22-C are provided to a second control and mapper interface 86 which is responsive to the ACTIVE signal on line 22-C to detect whether the type/address indicates that the operation present on the bus 22 is a response to a control operation from a downstream located unit to be processed by the control operation interface. This is done by decoding the type/address information from lines 22-A and testing or comparing selected fields with the wired address from bus 48. If yes, control and mapper interface 86 maps the type/address and data from lines 22-A and 22-D onto type/address bus 87 and data bus 90 according to the format of bus 20, as will be described in reference to Figure 4, and activates RESPONSE RECEIVED line 89 which is provided to return selection circuit 84.

If return selection circuit 84 is in its WAIT status, the signal on line 89 causes REMOTE RESPONSE line 92 to be activated by circuit 84. This line is provided to one input of OR circuit 93, the output signal of which on line 79 resets latch 76, so that return selection circuit 84 is no more activated.

Control and output logic circuit 65 controls the propagation of the response to the control operation on bus 20 by activating the REQUEST line 96 assigned to the control operation interface and is responsive to the GRANT signal received from the bus scheduler on the GRANT line 98 assigned to the control operation interface. If bus 20 is the processor bus 14, the signal on line 96 is used to signal that the response is present in the control operation interface of the coupler 8 and available for the control processor 3.

Selection circuit 50 generates a signal on a REMOTE/LOCAL output line 100 which is at a first level for example 0 when it detects that the control operation concerns a local resource and is at a second level, (1) when it detects that the control operation has to be propagated toward a downstream located unit.

This signal is provided to the control and output logic circuit 65.

Formats of the type/address information on the processor bus 14, system bus 7 and adapter bus 11, when an address is forwarded from the coupler to an end system and the response to a control operation is returned from the end system to the coupler are shown in Figure 4. These formats are only given as examples.

The type/address provided by the control processor on the system bus when a control operation is initiated, is shown by the first format: format 1.

The type field 102 is the type of operation field, it is set by the control processor to "1" for example for a control operation and set to 0 for a normal memory operation. The formats of the address bus for a memory operation are not shown in the Figure, the only requirement for these formats is that they also comprise the field 102, in order the control operation or memory operation can be processed by the control operation interface or memory operation interface.

The type field 103 in a control operation is set by the control processor 3 to indicate whether the control operation is a read or write operation.

The type field 104 is coded by the control processor 3 to indicate whether the control operation concerns a local resource of the coupler, an adapter or an end system.

Field 105 is the coupler address field.

Field 106 is the adapter address field.

Field 107 is the end system address field.

Field 108 is the local resource address field.

When a control operation is forwarded from the control processor to an end system the type/address fields are mapped by the control and mapper interfaces 68 of the traversed units as shown by formats 2 and 3.

When the control operation interface is returned to the control processor the type/address fields are mapped by the circuit 65 in the destination unit and control and mapper interface 86 of the traversed units as shown by formats 4 and 5.

The circuit 65 will now be described in reference to Figure 5.

It comprises an OR circuit 120 which receives as inputs: the LOCAL RESPONSE signal from output line 62 of OR circuit 63, the TIME OUT signal from line 82 and the REMOTE RESPONSE signal from line 92. A response has to be sent to bus 20 when one of these signals is active. The output signal from OR circuit 120 on line 121 is provided to a control interface circuit 122 which activates the REQUEST line 96 in response to the active signal on line 121.

The type/address on line 52 is provided to a mapper circuit 124 which maps the address fields from bus 52 to the format of the address/type on bus 20. For example, assuming that the addressed local resource is a resource of an end system, the type/address received on bus 52 has the format 3 shown in Figure 4 and the mapper circuit generates therefrom the address/type for adapter bus 11 with the format 4. If the addressed local resource is a resource of an adapter, the type/address received on bus 52 has the format 2 of Figure 4 and the mapper 124 in the control response interface of the adapter generates from the type/address it received on its bus 52, the type/address for system bus 7 with the format 5.

When the LOCAL signal on line 100 is at 0, meaning that a local response is to be returned by the interface control circuit, or when the timer has reached its time out value as indicated by an active signal on line 82, OR Circuit 126 generates an active signal on line 127 which is provided to AND gate 128 in order to gate the type/address from the output bus 130 of mapper circuit 124 into output address register 134 through output bus 131 of AND gate 128 and OR gate 132.

The data to be returned are either the local data from bus 60, if a read operation has been successfully completed or a return code RC = Write OK if a write operation has been successfully completed or a return code RC = R/W-KO if the read or write operation has been unsuccessfully completed or a return code RC = ACK if an acknowledgement is returned from the local resource.

The local data from bus 60 are provided by AND gate 136 conditioned by the READ-OK signal from line 61-R and LOCAL signal on line 100 at 0, on its output bus 137. The return codes stored in register 138, 140 and 142 are gated on the register output busses 139, 141, 143 when the LOCAL signal on line 100 is at 0 and when the WRITE-OK signal on line 61-W or signal on lines 61-R/W-KO or 61-ACK are active. Busses 137, 139, 141, 143 are provided to the inputs of OR circuit 146 which gates the local data or return codes into output data register 148.

When the Grant signal is received from the bus scheduler on line 98, the interface control circuit 122 activates its output line 123 and the bus ACTIVE line 20-C. The activation of line 123 causes the contents of address and data registers 234 and 148 to be provided on address/type lines 20-A and data lines 20-D of bus 20.

If the response received from a downstream located unit has to be returned to the bus 20, the type/address from bus 88 are gated by AND gate 150 conditioned by the REMOTE signal on line 100 at 1, on an input bus 151 of the OR gate 132 so that the type/address is provided into the address register 134.

The remote data from bus 91 are gated by AND gate 152 conditioned by the REMOTE signal on line 100 at 1 onto an input bus 153 of OR circuit 146 so that the data are provided into the data register 148.

When the remote response line 92 is active meaning that a response is received from a downstream located unit, line 121 is activated and interface control circuit 122 raises a request on line 96 in response thereto.

When the grant signal is received from the bus scheduler on line 98, interface control circuit 122 activates line 123 to gate the contents of the address and data registers on lines 20-A and 20-D of bus 20.

In addition if the REMOTE signal on line 100 is at 1 and that no response is received before the time out delay fixed by the timer a return code: RC = T.O. stored in register 154, indicating that the time out delay has expired, is gated on an input bus 155 of OR circuit 146 and provided in data register 148.

If the time out signal on line 82 is active, interface control circuit 65 generates a REQUEST on line 96, and when the grant signal is received it activates bus ACTIVE line 20-C and gates the type/address from bus 130 stored in address register 134 on lines 20-A and the return code RC = T.O. stored in data register 148 on lines 20-D.

It will now be described how a control operation is forwarded, executed and the response returned to the control processor.

Since each unit, such as coupler 8, adapter 2 (such as 2-1 to 2-n) and end system 1 (such as 1-11 to 1-1p and 1-n1 to 1-nq), comprises a control operation interface as described in reference to Figures 3, 4 and 5, the components of the circuits of Figures 3 and 5 will be named their reference numbers followed by a suffix 8, (2-1) to (2-1) and (1-11) to (1-1p), (1-n1) to (1-nq) to indicate to which unit they pertain, for example selection circuit 50-8 refers to the selection circuit 50 in the control operation interface 28-8 of coupler 8.

So, in the control operation interface of coupler 8 which has been activated by selection circuit 28-8 upon detection of field 102 set to 1, selection circuit 50-8 detects whether the field 104 is set to 00. If yes, fields 103 and 108 are provided on type/address bus 54-8. If no, the selection circuit 50-8 activates the line 64-8 and the line 74-8 to set latch 76-8 and set the return selection circuit 84-8 in its WAIT status, so that it is ready to receive the response to the control operation when executed by the destination unit. Also, selection circuit 50-8 gates the type/address fields from bus 52-8 to bus 66-8.

The mapper and control interface 68-8 in response to the activation of line 64-8, raises the request line 70-8 of bus 22-8 which is the system bus 7. When the grant signal is received from the grant line 72-8 of bus 22-8, it raises the control operation line 22-C of bus 22-8 and gates the fields 102, 103, 104, 106, 107 and 108 from bus 66-8 on type/address lines 22-A of bus 22-8 and the data, if any from bus 56-8 on data lines 22-D of bus 22-8.

These type/address fields are received by the control operation interfaces in adapters 2-1 to 2-n and fields 104 and 106 are provided to the selection circuits 50-(2-1) to 50-(2-n). Each selection circuit compares its wired address with the adapter address in field 106.

A match is detected by one selection circuit, for example 50-(2-1). This selection circuit detects whether the field 104 is set to 01.

If yes, which means that the control operation concerns a local resource of adapter 2-1, the fields 103 and 108 are provided to bus 54-(2-1) to execute the control operation.

If no, the selection circuit 50-(2-1) activates the line 64-(2-1) and line 74-(2-1) to set latch 76-(2-1) and set the return selection circuit 84-(2-1) in its WAIT status, so that it is ready to receive the response from the end system. Also, selection circuit 50-(2-1) gates the type/address fields from bus 52-(2-1) to bus 66-(2-1).

The mapper and control interface 68-(2-1) in response to the activation of line 64-(2-1), raises the request line 70-(2-1) of bus 22-(2-1) which is the adapter bus 11-1 and when the grant signal is received from the grant line 72-(2-1) of bus 22-(2-1) it raises the control operation line 22-C of bus 22-(2-1) and gates the fields 102, 103, 104, 107 and 108 from bus 66-(2-1) on type/address lines of bus 22-(2-1) and the data, if any from bus 56-(2-1) on data lines of bus 22-(2-1).

Eventually, the control operation reaches the end systems. In that case, it concerns a local resource of an addressed end system and does not need to be forwarded. So, the control operation interface in the end systems 1 can only comprise the input registers 42-1, 44-1 and interface control 40-1, selection circuit 50-1, and the part of the circuit 65-1 which is used for transmitting a local response.

All the end systems connected to adapter bus 11-1, which is the input bus 20-1 of the control operation interfaces in end systems 1-11 to 1-1n receive the address from lines 20-A. Only one circuit, for example the selection circuit 50-(1-11) detects a match with its wired address and detects that field 104 is set to 10. In response thereto, it provides the fields 103 and 108 to bus 54-(1-11) together with the data if any to bus 57-(1-11). The control operation is executed and the response is returned through bus 60-(1-11) and line 62-(1-11), circuit 65-(1-11), with a type/address of format 4 shown in Figure 5.

The response is forwarded toward the control processor, thanks to the return select circuit 84-(2-1) and 84-8. The mapper and control interfaces 86-(2-1) of the adapter 2-1 transforms the received address of format 4 into an address of format 5.

A response to a control operation which concerns a local resource of an addressed adapter or the coupler is returned to the control processor in the same way.

In order to compare the occupancy times of the busses versus the prior art as described in the background part, the scenario of a complete control operation concerning a local resource of an end system is summarized below.

1- The control operation is presented by the control processor 3 on the processor bus 14: (step duration t1).

2- The control operation is received by the control operation interface 26-8 in coupler 8 and waits in this interface until the grant signal is received from the system bus scheduler: (step duration T1)

3- Once the grant signal is received from the system bus scheduler, the control operation is presented on the system bus 7: (step duration t2).

4- The control operation is processed by the control operation interfaces 26 of the adapters, and waits in the control operation interface of the adapter which recognizes its address until the grant signal is received from the adapter bus scheduler: (step duration T2).

5- Once the grant signal is received from the adapter bus scheduler the control operation is presented on the addressed adapter bus 11: (step duration t3).

6- The control operation is received by the end systems connected to the addressed adapter bus and executed in the addressed end systems: (step duration T3).

7- The control operation response is prepared and waits in the control interface of the addressed end system until the interface control 102-(1-11) receives the grant signal from the adapter bus scheduler: (step duration T3')

8- The control operation response is present on adapter bus 11-1: (step duration t'3).

9- The control operation response is received by the control operation interface of the adapter and waits in this interface until the grant signal is received from the system bus scheduler: (step duration T'2).

10- Once the grant signal is received from the system bus scheduler the control operation response is present on the system bus: (step duration t'2).

11- The control operation response is received by the control operation interface of the coupler and waits in this interface until it can be transmitted to the control processor 3: (step duration T'1).

12- The control operation response is presented on the processor bus 14 to the control processor: (step duration t'1)

Thus, the system bus occupancy is t2 + t'2, the adapter bus occupancy is t3 + t'3 and the processor bus occupancy is either t1 + t'1 if the control processor 3 operates in such a way that it presents a control operation on the coupler bus 14 and releases the bus until it is interrupted when the response is available in the control operation interface 26-8 or is :

$(t1 + t2 + t3 + t'1 + t'2 + t'3 + T1 + T2 + T3 + T'1 + T'2 + T'3)$

if the control processor 3 waits for the control operation response before using the coupler bus 14 for any other purpose.

The timers 80 in the control operation interfaces of the coupler 8 and adapters 2-1 to 2-n allow to check that a control operation is followed by a response within a delay fixed by the time out values of the timers. Thus, an accurate failure isolation is possible.

The present invention has been described assuming that the control operations are read or write operations of registers or private store within the units comprising the data processing system. It will be obvious for the man skilled in the art to implement the subject invention in a different environment for performing other control operations.

**Claims**

1. Apparatus for controlling distributed resources of a data processing system comprising a plurality of data processing adapters (2-1 to 2-n) connected to a system bus (7) allowing data transfers to be performed between a memory (4) and the data processing adapters, a control processor (3) connected to a processor bus (14) coupled to the system bus (7) through a coupling means (8) and a system bus scheduler (10) managing the accesses to the system bus, said apparatus being characterized in that the:

   coupling means comprises a control operation interfacing means (26-8), connected to the processor bus on the one hand and to the system bus on the other hand and including:
   - coupler control operation receiving means (40,42,44,50) responsive to the information on the processor bus (14) for determining whether this information is a control operation for a resource of a data processing adapter and if yes requesting an access to the system bus (7) through the system bus scheduler and forwarding the control operation from the processor bus (14) to the system bus (7) when the access is authorized by the bus scheduler,
   - coupler response receiving means (86, 84, 65) which are set in a wait status when the control operation receiving means detect that the control operation is for a resource of a data processing adapter and are responsive to the information present on the system bus (7) for detecting when set in the wait status whether this information is a response to the control operation for storing the control operation response in coupler response storing means (134,148) where the response is available for the control processor.

2. An apparatus according to claim 1 characterized in that the control operations provided on the processor bus by the control processor (3) comprises a control operation code (102) which distinguishes the control operations from any other operation which can be present on the processor bus (14) and system bus (7), a type of operation code (103) indicative of the type of control operation initiated by the control processor (3) and an address code (104 to 108) comprising the address of the resource to be controlled by the control operation.

3. An apparatus according to claim 1 or 2 characterized in that the coupler control operation interfacing means comprise:
   - timing means (76,80) which have an initial value and a time out value set to a fixed value which depends upon the maximum delay needed to receive a response to a control operation, said timing means being set to their initial value when the coupler control operation receiving means determine that the information on the processor bus is a control operation which is forwarded on the system bus, the timing means value being then changed stepwise until the timing means are reset to their initial value when the coupler response receiving means detect that a response is received from the system bus,
   and being further characterized in that:
   - the coupler response receiving means are responsive to the time out value reached by the timing means for preparing a response (RC = T.O.) in the coupler response storing means indicative that no response has been received whereupon the coupler response receiving means are set in the inactive state.

4. An apparatus according to claim 2 or 3 characterized in that the coupler control operation receiving means are responsive to the information present on the processor bus (14) for determining whether this information contains the control operation code and an address code identifying a resource of a data processing adapter or a resource of the coupling means for either forwarding the control operation on the system bus (7) or executing the control operation in the coupling means and preparing a response which is stored in the coupler response storing means.

5. An apparatus according to claim 2, 3 or 4 characterized in that each data processing adapter (2) comprises adapter control operation interfacing means connected to the system bus and including:

adapter control operation receiving means (40, 42, 44, 50) responsive to the information present on the system bus for determining whether it contains the control operation code and an address code identifying a resource of a data processing adapter or not,

adapter control operation executing means (54,57,63,65) for executing the control operation and for preparing a response when the adapter control operation receiving means determine that a control operation for a resource of the data processing adapter is present on the system bus (7) and storing the response in adapter response storing means (134, 138)

adapter response transmitting means (122-2) for requesting an access to the system bus (7) through the system bus scheduler (10) when the response is stored in the adapter response storing means and gating the response from the adapter response storing means onto the system bus (7) when the bus access is authorized by the system bus scheduler.

6. An apparatus according to claim 5 characterized in that the data processing adapters (2-1 to 2-n) control the data transfers between the memory and end systems (1-11 to 1-1p;1-n1 to 1-nq) connected to the data processing adapters through adapter busses (11-1, 11-n) the accesses of which are controlled by adapter bus schedulers (12-1, 12-n) and the control operations provided by the control processor on the processor bus can be control operations for resources of the end systems identified in the address codes of the control operations and have a control operation code which distinguishes the control operations from any other operation which can be present on the adapter busses.

7. An apparatus according to claim 6 characterized in that the:

the adapter control operation receiving means in each data processing adapter (2) are responsive to the information present on the system bus for determining whether this information contains the control operation code and if yes, contains the address code of a resource of an end system attached to the adapter bus (11) for requesting the access to the adapter bus through the adapter bus scheduler (12) and forwarding the control operation on the adapter bus when the adapter bus scheduler grants the access to the adapter bus, said apparatus being further characterized in that:

the adapter response transmitting means comprise:
- adapter response receiving means (84-2,86-2) which are set in a wait status when the adapter control operation receiving means determines that a control operation is for an end system connected to the adapter bus and are responsive to the information present on the adapter bus for determining, when set in the wait status whether this information is a response to a propagated control operation for storing the response in the adapter response storing means, so that the adapter response transmitting means requests an access to the system bus (7) and gates the contents of the adapter response storing means on the system bus when the access to the bus is authorized by the adapter bus scheduler.

8. An apparatus according to claim 7 characterized in that each end system (1) comprises end system control operation interfacing means (26) connected to the adapter bus (11) and including:

end system control operation receiving means (40, 42, 44, 50) responsive to the information present on the adapter bus (11) for determining whether it contains the control operation code and an address code identifying a resource of the end system or not,

end system control operation executing means (54,57,63,65) for executing the control operation and for preparing a response when the end system control operation receiving means determine that a control operation for a resource of the end system is present on the adapter bus and storing the response in end system response storing means (134, 138)

end system control operation response transmitting means (122) for requesting an access to the adapter bus (11) through the adapter bus scheduler (12) when the response is stored in the end system response storing means and gating the response from the end system response storing means onto the adapter bus when the bus access is authorized by the adapter bus scheduler.

9. An apparatus according to claim 7 or 8 characterized in that each adapter control operation interfacing means comprise:

timing means (78, 80) which have an initial value and a time out value set to a fixed value which depends upon the maximum delay needed to receive a response to a control operation, said timing means being set to their initial value when the adapter control operation receiving means determine that the information on the system bus is a control operation which has to be forwarded on the adapter bus, the timing means value being then changed stepwise until the timing means are reset to their initial value when the adapter response receiving means detect that a response is received from the adapter bus, said apparatus being further characterized in that:

the adapter response receiving means are responsive to the time out value reached by the timing means for preparing a response (RC = T.O.) in the adapter response storing means indicative that no response has been received, whereupon the adapter response receiving means are set in the inactive state and the adapter response transmitting means requests an access to the system bus and gates the contents of the adapter response storing means on the system bus when the access to the bus is authorized by the system bus scheduler.

10. An apparatus according to any one of claim 7, 8 or 9 characterized in that the resources to be controlled are memory locations (5, 6) within the coupling means, data processing adapters and end systems and the control operations are read or write operations of addressed memory locations.

11. An apparatus according to claim 10 characterized in that the address code of a control operation on the processor bus for a resource of the coupling means comprise the address of the coupling means (104,105) and the address of the memory location to be controlled (108) and the response stored in the coupler storing means comprise at least the data which are read from the addressed location if the control operation is a read operation which has been successfully completed or a write return code if the control operation is a write operation which has been successfully completed or an error return code if the control operation has not been successfully completed.

12. An apparatus according to claim 11 characterized in that:

the address code of a control operation on the processor bus (14) for a resource of a data processing adapter comprises the address of the coupling means (105), the address of the data processing adapter (104, 106) and the address of the memory location to be controlled (108),

the address code which is forwarded on the system bus (7) by the coupler control operation receiving means comprises at least the address of the data processing adapter and the address of the memory location.

13. An apparatus according to claim 12 characterized in that:

the response prepared by the adapter control operation executing means and stored in the adapter storing means comprise at least the data which are read from the addressed location if the control operation is a read operation which has been successfully completed or a write return code if the control operation is a write operation which has been successfully completed or an error return code if the control operation has not been successfully completed, the control operation code and the address of the coupling means.

14. An apparatus according to any one of claims 11 to 12 characterized in that:

the address code of a control operation on the processor bus (14) for a resource of an end system comprises the address of the coupling means (105), the address of the data processing adapter (106) to which the end system is attached, the address of the end system (107) and the address of the memory location to be controlled (108),

the address code which is forwarded on the system bus (7) by the coupler control operation receiving means comprises at least the address of the data processing adapter, the address of the end system and the address of the memory location to be controlled.

15. An apparatus according to claim 14 characterized in that:

the response prepared by the end system control operation executing means and stored in the end system storing means comprise at least the data which are read from the addressed location if the control operation is a read operation which has been successfully completed or a write return code if the control operation is a write operation which has been successfully completed or an error return code if the control operation has not been successfully completed, the control operation code and the address of the data processing adapter to which the end system is attached.

FIG.1

UNIT (COUPLER, DATA ADAPTER OR END SYSTEM)

FIG.2

SIDE 1

SIDE 2

24

DATA STORAGE OPERATION INTERFACE

30

INTERFACE SELECTION

32    28

CONTROL OPERATION INTERFACE

26

PROCESSOR BUS

OR SYSTEM BUS

OR ADAPTER BUS

ADDRESS/CONTROL

DATA

20

SYSTEM BUS

OR ADAPTER BUS

OR END USER BUS

ADDRESS/CONTROL

DATA

22

LOCAL RESOURCES

34

EP 0 505 651 A1

FIG.3A

BUS 22

# FIG.3B

## FIG.3

| FIG.3A |
|--------|
| FIG.3B |

EP 0 505 651 A1

TYPE                     ADDRESS

BUS 14
TYPE/ADDRESS
FROM PROCESSOR

| 102 | 103 | 104 | 105 | 106 | 107 | 108 | FORMAT 1 |

CONTROL OPERATION = 1
MEMORY OPERATION = 0

LOCAL RESOURCE ADDRESS

END SYSTEM ADDRESS

ADAPTER ADDRESS

COUPLER ADDRESS

00 = CONTROL OPERATION FOR COUPLER LOCAL RESOURCE
01 = CONTROL OPERATION FOR ADAPTER LOCAL RESOURCE
10 = CONTROL OPERATION FOR END SYSTEM LOCAL RESOURCE

R/W = 0 READ
= 1 WRITE

TYPE

BUS 7
TYPE/ADDRESS
FROM COUPLER

| 102 | 103 | 104 | 106 ADAPTER | 107 END SYSTEM | 108 LOCAL RESOURCE | FORMAT 2 |

TYPE

ADAPTER BUS 11
TYPE/ADDRESS
FROM ADAPTER

| 102 | 103 | 104 | 107 END SYSTEM | 108 LOCAL RESOURCE | FORMAT 3 |

TYPE

ADAPTER BUS 11
TYPE/ADDRESS
FROM END USER

| 102 | 103 | 104 | 106 ADAPTER | 107 END SYSTEM | XXXXXX | FORMAT 4 |

TYPE

BUS 7
TYPE/ADDRESS
FROM ADAPTER

| 102 | 103 | 104 | 105 COUPLER | 106 ADAPTER | 107 END SYSTEM | XXXXXX | FORMAT 5 |

FIG. 4

# FIG.5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | EP-A-0 362 425 (ADVANCED MICRO DEVICES)<br>* abstract *<br>* page 3, line 10 - line 42 *<br>* figures 1,3 *<br>--- | 1 | G06F13/40<br>G06F13/38 |
| A | US-A-4 509 113 (HEATH)<br>* abstract *<br>* column 2, line 55 - column 4, line 27 *<br>* figure 2 *<br>----- | 1 | |

TECHNICAL FIELDS SEARCHED (Int. Cl.5 )

G06F

The present search report has been drawn up for all claims

| Place of search | Date of completion of the search | Examiner |
|---|---|---|
| THE HAGUE | 20 DECEMBER 1991 | MCDONAGH F.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)